# EUROPEAN PATENT APPLICATION

(11) **EP 3 346 673 A1**
(43) Date of publication of application: **11.07.2018**
(21) Application number: 18158418.6
(22) Date of filing: 08.05.2013
(51) Int. Cl.: H04L 29/12

(54) **SYSTEMS AND METHODS FOR DOMAIN NAME SYSTEM QUERYING**

(30) Priority: 11.05.2012 US 201261646138 P; 13.02.2013 US 201313766714
(62) Divisional of application: 13726619.3
(71) Applicant: QUALCOMM Incorporated, San Diego, CA 92121 (US)
(72) Inventor: CHERIAN, George, San Diego, CA, 92121-1714 (US); ABRAHAM, Santosh Paul, San Diego, CA, 92121-1714 (US)
(74) Representative: Wegner, Hans

(57) **Abstract**

Systems and methods for reducing latency associated with establishing communication with a server utilizing a wireless communication system are described. One aspect enhances domain name system querying. For example, an electronic device may transmit a request for server to a service providing device. Prior to one of IP address assignment, authentication of the electronic device, or association of a link-layer with the electronic device, a request for domain name resolution for a server may be transmitted to the service providing device. A response is received by the electronic device indicating the network service provided, with the request for domain name resolution being transmitted prior to receiving the response. In one aspect, the request for domain name resolution is performed as part of the request for network service transmitted from the electronic device to the service providing device.

## Description

### CROSS REFERENCE TO RELATED APPLICATIONS

This application claims priority under 35 U.S.C. Section 119(e) to U.S. Provisional Application 61/646,138, filed on May 11, 2012, entitled "SYSTEMS AND METHODS FOR DOMAIN NAME SYSTEM QUERYING," which is assigned to the assignee hereof. The disclosure of the provisional application is considered part of, and is hereby incorporated by reference in, this application.

### BACKGROUND

### Field

The present application relates generally to wireless communication systems and more specifically to systems, methods, and devices for domain name system (DNS) querying within wireless communication systems.

### Background

In many telecommunication systems, communications networks are used to exchange messages among several interacting spatially-separated devices. Networks may be classified according to geographic scope, which could be, for example, a metropolitan area, a local area, or a personal area. Such networks would be designated respectively as a wide area network (WAN), metropolitan area network (MAN), local area network (LAN), or personal area network (PAN). Networks also differ according to the switching/routing technique used to interconnect the various network nodes and devices (e.g. circuit switching vs. packet switching), the type of physical media employed for transmission (e.g. wired vs. wireless), and the set of communication protocols used (e.g. Internet protocol suite, SONET (Synchronous Optical Networking), Ethernet, etc.).

Wireless networks are often preferred when the network elements are mobile and thus have dynamic connectivity needs, or if the network architecture is formed in an ad hoc, rather than fixed, topology. Wireless networks employ intangible physical media in an unguided propagation mode using electromagnetic waves in the radio, microwave, infra-red, optical, etc. frequency bands. Wireless networks advantageously facilitate user mobility and rapid field deployment when compared to fixed wired networks.

### SUMMARY

The systems, methods, and devices of the invention each have several aspects, no single one of which is solely responsible for its desirable attributes. Without limiting the scope of this invention as expressed by the claims which follow, some features will now be discussed briefly. After considering this discussion, and particularly after reading the section entitled "Detailed Description" one will understand how the features of this invention provide advantages that include fast initial network link setup wireless communication systems for access points and devices.

In one innovative aspect, a method of submitting domain name system queries in a wireless communication system is provided. The method includes transmitting a request for a network service from an electronic device to a service providing device. The method includes transmitting a request for domain name resolution from the electronic device to the service providing device prior to at least one of assignment of an IP address to the electronic device, authentication of the electronic device, and association of a link-layer with the electronic device. The method also includes receiving a response indicating the network service provided, the request for domain name resolution being transmitted prior to receiving the response.

In a further innovative aspect, an apparatus is provided. The apparatus includes an application configured to communicate with a network server. The apparatus includes a transmitter configured to transmit a request for a network service to a service providing device, the transmitter further configured to transmit a request for domain name resolution for the network server prior to at least one of assignment of an IP address to the electronic device, authentication of the electronic device, and association of a link-layer with the electronic device. The apparatus further includes a receiver configured to receive an indication of the network service provided, the request for domain name resolution being transmitted prior to receiving the indication of the network service provided.

In a further innovative aspect, another apparatus is provided. The apparatus includes means for communicating with a network server. The apparatus also includes means for transmitting a request for a network service to a service providing device, means for transmitting a request for domain name resolution for the network server prior to at least one of assignment of an IP address to the electronic device, authentication of the electronic device, and association of a link-layer with the electronic device. The apparatus further includes means for receiving an indication of the network service provided, the request for domain name resolution being transmitted prior to receiving the indication of the network service provided.

In another innovative aspect, a computer readable storage medium including instructions executable by a processor of an apparatus is provided. The instructions cause the apparatus to transmit a request for a network service from an electronic device to a service providing device. The instructions further cause the apparatus to transmit a request for domain name resolution from the electronic device to the service providing device prior to at least one of assignment of an IP address to the electronic device, authentication of the electronic device, and association of a link-layer with the electronic device. The instructions also cause the apparatus to receive a response indicating the network service provided, the request for domain name resolution being transmitted prior to receiving the response.

A further innovative method of receiving domain name system queries in a wireless communication system is described. The method includes receiving a request for a network service from an electronic device at a service providing device. The method also includes receiving a request for domain name resolution from the electronic device at the service providing device prior to at least one of assignment of an IP address to the electronic device, authentication of the electronic device, and association of a link-layer with the electronic device. The method further includes transmitting a response indicating the network service provided, the request for domain name resolution being received prior to transmitting the response.

An additional innovative apparatus is discussed. The apparatus includes a receiver configured to receive a request for a network service from an electronic device and to receive a request for domain name resolution from the electronic device prior to at least one of assignment of an IP address to the electronic device, authentication of the electronic device, and association of a link-layer with the electronic device. The apparatus further includes a transmitter configured to transmit a response indicating the network service provided, the request for domain name resolution being received prior to transmitting the response.

A further innovative apparatus is provided. The apparatus includes means for receiving a request for a network service from an electronic device. The apparatus includes means for receiving a request for domain name resolution from the electronic device prior to at least one of assignment of an IP address to the electronic device, authentication of the electronic device, and association of a link-layer with the electronic device. The apparatus includes means for transmitting a response indicating the network service provided, the request for domain name resolution being received prior to transmitting the response.

A computer readable storage medium comprising instructions executable by a processor of an apparatus is provided in a further innovative aspect. The instructions cause the apparatus to receive a request for a network service from an electronic device at a service providing device. The instructions cause the apparatus to receive a request for domain name resolution from the electronic device at the service providing device prior to at least one of assignment of an IP address to the electronic device, authentication of the electronic device, and association of a link-layer with the electronic device. The instructions cause the apparatus to transmit a response indicating the network service provided, the request for domain name resolution being received prior to transmitting the response.

### BRIEF DESCRIPTION OF THE DRAWINGS

FIG. 1 shows an exemplary wireless communication system in which aspects of the present disclosure may be employed.
FIG. 2 shows a functional block diagram of an exemplary wireless device that may be employed within the wireless communication system of FIG. 1.
FIG. 3 shows an exemplary implementation of a wireless communication system.
FIG. 4 shows a functional block diagram of an example of an association request processor.
FIG. 5 shows a call flow diagram for an example association request DNS query.
FIG. 6 shows a call flow diagram for another example association request DNS query.
FIG. 7 shows a process flow diagram for a method of submitting domain name system queries in a wireless communication system.
FIG. 8 shows a functional block diagram for a wireless communication apparatus.
FIG. 9 shows a process flow diagram for a method of receiving domain name system queries in a wireless communication system.
FIG. 10 shows a functional block diagram for another wireless communication apparatus.

### DETAILED DESCRIPTION

Various aspects of the novel systems, apparatuses, and methods are described more fully hereinafter with reference to the accompanying drawings. The teachings disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the novel systems, apparatuses, and methods disclosed herein, whether implemented independently of or combined with any other aspect of the invention. For example, an apparatus may be implemented or a method may be practiced using any number of the aspects set forth herein. In addition, the scope of the invention is intended to cover such an apparatus or method which is practiced using other structure, functionality, or structure and functionality in addition to or other than the various aspects of the invention set forth herein. It should be understood that any aspect disclosed herein may be embodied by one or more elements of a claim.

Although particular aspects are described herein, many variations and permutations of these aspects fall within the scope of the disclosure. Although some benefits and advantages of the preferred aspects are mentioned, the scope of the disclosure is not intended to be limited to particular benefits, uses, or objectives. Rather, aspects of the disclosure are intended to be broadly applicable to different wireless technologies, system configurations, networks, and transmission protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

Popular wireless network technologies may include various types of wireless local area networks (WLANs). A WLAN may be used to interconnect nearby devices together, employing widely used networking protocols. The various aspects described herein may apply to any communication standard, such as wireless protocols. For example, the various aspects described herein may be used as part of the IEEE 802.11ah protocol, which uses sub-1GHz bands. While the terminology may be used in describing 802.11 systems, the disclosure is not limited to 802.11 wireless technologies. The systems and methods described herein may be applied for DNS querying in LTE, UMTS, HRPD, or CDMA (e.g., CDMA 1x) based networks.

In some aspects, wireless signals in a sub-gigahertz band may be transmitted, for example, according to the 802.11 ah protocol. Transmission may use orthogonal frequency-division multiplexing (OFDM), direct-sequence spread spectrum (DSSS) communications, a combination of OFDM and DSSS communications, or other schemes. Implementations of the 802.11 ah protocol or other sub-gigahertz protocols may be used for sensors, metering, and smart grid networks. Aspects of certain devices implementing such protocols may consume less power than devices implementing other wireless protocols. These devices may be used to transmit wireless signals across a relatively long range, for example about one kilometer or longer.

In some implementations, a WLAN includes various devices which are the components that access the wireless network. For example, there may be two types of devices: access points (APs) and clients (also referred to as stations, or STAs). In general, an AP serves as a hub or base station for the WLAN and an STA serves as a user of the WLAN. For example, an STA may be a laptop computer, a personal digital assistant (PDA), a mobile phone, etc. In an example, an STA connects to an AP via a WiFi (e.g., IEEE 802.11 protocol such as 802.11ah) compliant wireless link to obtain general connectivity to the Internet or to other wide area networks. In some implementations an STA may also be used as an AP.

An access point (AP) may also comprise, be implemented as, or known as a NodeB, Radio Network Controller (RNC), eNodeB, Base Station Controller (BSC), Base Transceiver Station (BTS), Base Station (BS), Transceiver Function (TF), Radio Router, Radio Transceiver, or some other terminology.

A station "STA" may also comprise, be implemented as, or be known as an access terminal (AT), a subscriber station, a subscriber unit, a mobile station, a remote station, a remote terminal, a user terminal, a user agent, a user device, user equipment, or some other terminology. In some implementations an access terminal may comprise a cellular telephone, a cordless telephone, a Session Initiation Protocol (SIP) phone, a wireless local loop (WLL) station, a personal digital assistant (PDA), a handheld device having wireless connection capability, or some other suitable processing device connected to a wireless modem. Accordingly, one or more aspects taught herein may be incorporated into a phone (e.g., a cellular phone or smartphone), a computer (e.g., a laptop), a portable communication device, a headset, a portable computing device (e.g., a personal data assistant), an entertainment device (e.g., a music or video device, or a satellite radio), a gaming device or system, a global positioning system device, or any other suitable device that is configured to communicate via a wireless medium.

As discussed above, certain of the devices described herein may implement the 802.11ah standard, for example. Such devices, whether used as an STA or AP or other device, may be used for smart metering or in a smart grid network. Such devices may provide sensor applications or be used in home automation. The devices may instead or in addition be used in a healthcare context, for example for personal healthcare. They may also be used for surveillance, to enable extended-range Internet connectivity (e.g. for use with hotspots), or to implement machine-to-machine communications.

Before a device may begin using a network, the device may need to identify an access point for the network. The device may discover an access point by transmitting or receiving signals. For example, a device may discover an acess point by receiving a beacon signal from the access point. Alternatively, a device may discover an access point by broadcast a request for services. An access point may then respond to the broadcast request. In some implementations, many devices may be trying to identify an access point for the network. Each access point may need to service these devices by transmitting signals to the devices or receiving signals from many devices. For example, when several devices move into the vicinity of a new network and transmit messages for link set up, the resulting rate of collisions can introduce latencies in link set up.

Various techniques may be employed to reduce the link set up time to allow a device to access the network. However, additional signaling may be needed for the device to perform an action on the network. For example, before a device may communicate with a node or server over the network, the device may need to obtain a network address for the node or server. One type of signaling used to obtain a network address includes domain name system querying. A request for domain name resolution may include as input a hostname or domain name for a node or server operating on a network. A request for domain name resolution response may include a network address the requesting node may use to communicate with the node or server.

A request for domain name resolution may be transmitted by the device or an application associated with the device. In an embodiment, the query provides a name for a network location of interest. In response, an address such as an IP address may be provided identifying the location on the network. Minimizing the time to complete this query can reduce the time a device or application associated with a device takes to begin operating. For example, there may be latency associated with performing a DNS system query. First, the DNS query must be generated and transmitted to a DNS server. Once the DNS server receives the DNS query, additional latency may be introduced as the DNS server searches one or more databases or other data structures to determine how to response to the query. Additional latency may be introduced while the DNS server generates a response and then the response is transmitted via the network back to the original requesting electronic device. Accordingly, improved methods and systems for enhanced domain name system (DNS) querying within wireless communication systems are desirable.

One method to manage latency in a network system is to perform operations in parallel. For example, if a plurality of processes are performed serially, the time required to complete all of the processes will be at least the sum of the time required to perform each process individually. If the plurality of processes are performed in parallel, the time required to complete all of the processes may be as low as the time necessary to complete the longest process.

Some of the disclosed embodiments parallelize a process of establishing communication with a server over a wireless communications network. By performing some processes associated with establishing the communication in parallel, the latency associated with establishing communication over a wireless communication system may be reduced when compared to serialized communication establishment processes. In one aspect, the process of establishing communication with a server is parallelized by performing a DNS system query process in parallel with a process of establishing network service with a service providing device. By performing these processes in parallel, an electronic device seeking to establish communication with a server may not need to wait until wireless communication service is established before performing a DNS query for a node or server it will communicate with. As a result, latency associated with performing a DNS query for the node or server may be experienced in parallel with other latency associated with establishing wireless communication, thereby minimizing its impact on the overall process of establishing communication with the server.

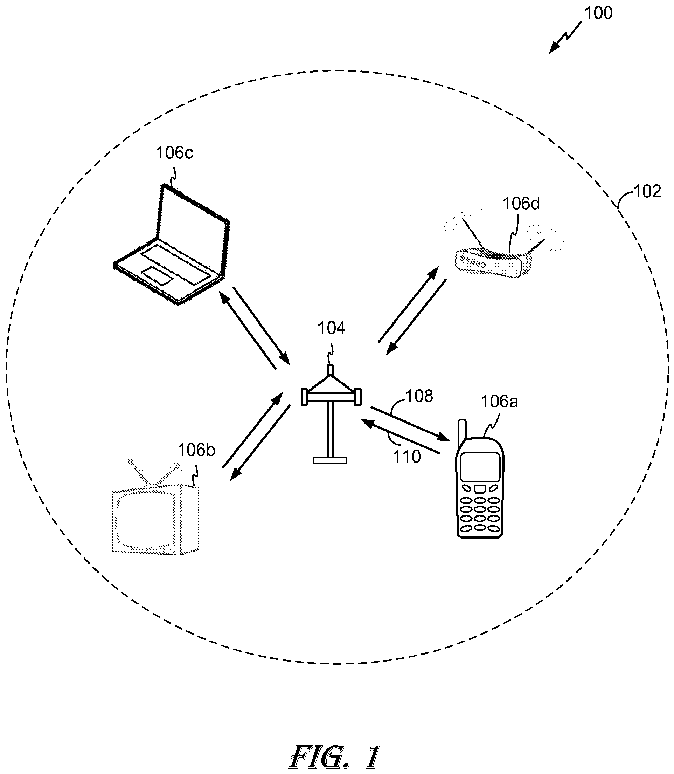

FIG. 1 shows an exemplary wireless communication system. The wireless communication system 100 may operate pursuant to a wireless standard, for example the 802.11ah standard. The wireless communication system 100 may include an AP 104, which communicates with STAs such as a mobile phone 106a, a television 106b, a computer 106c, or another access point 106d (individually or collectively hereinafter identified by 106).

A variety of processes and methods may be used for transmissions in the wireless communication system 100 between the AP 104 and the STAs 106. For example, signals may be sent and received between the AP 104 and the STAs 106 in accordance with OFDM/OFDMA techniques. If this is the case, the wireless communication system 100 may be referred to as an OFDM/OFDMA system. Alternatively, signals may be sent and received between the AP 104 and the STAs 106 in accordance with CDMA techniques. If this is the case, the wireless communication system 100 may be referred to as a CDMA system.

A communication link that facilitates transmission from the AP 104 to one or more of the STAs 106 may be referred to as a downlink (DL) 108, and a communication link that facilitates transmission from one or more of the STAs 106 to the AP 104 may be referred to as an uplink (UL) 110. Alternatively, a downlink 108 may be referred to as a forward link or a forward channel, and an uplink 110 may be referred to as a reverse link or a reverse channel.

The AP 104 may provide wireless communication coverage in a basic service area (BSA) 102. The AP 104 along with the STAs 106 associated with the AP 104 and that are configured to use the AP 104 for communication may be referred to as a basic service set (BSS). It should be noted that the wireless communication system 100 may not have a central AP 104, but rather may function as a peer-to-peer network between the STAs 106. Accordingly, the functions of the AP 104 described herein may alternatively be performed by one or more of the STAs 106.

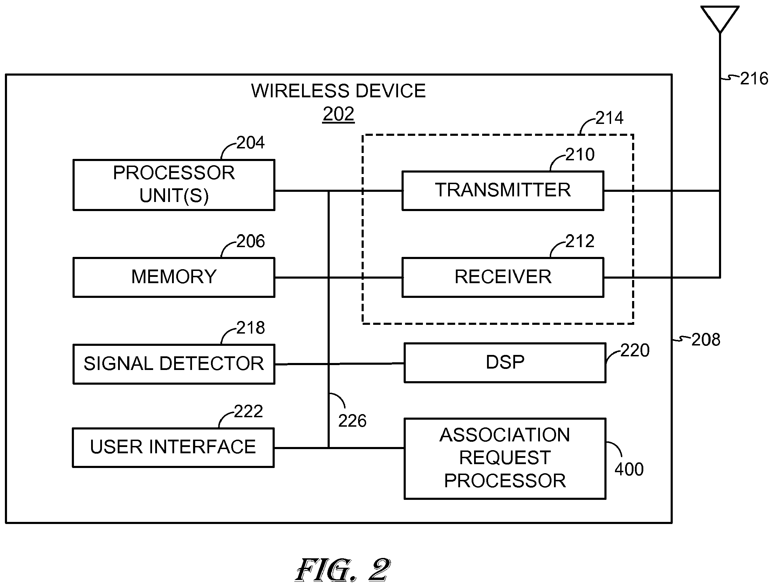

FIG. 2 shows a functional block diagram of an exemplary a wireless device that may be employed within the wireless communication system of FIG. 1. The wireless device 202 is an example of a device that may be configured to implement the various methods described herein. For example, the wireless device 202 may comprise the AP 104 or one of the STAs 106.

The wireless device 202 may include processor unit(s) 204 which control operation of the wireless device 202. One or more of the processor unit(s) 204 may be collectively referred to as a central processing unit (CPU). Memory 206, which may include both read-only memory (ROM) and random access memory (RAM), provides instructions and data to the processor units 204. A portion of the memory 206 may also include non-volatile random access memory (NVRAM). The processor unit(s) 204 may be configured to perform logical and arithmetic operations based on program instructions stored within the memory 206. The instructions in the memory 206 may be executable to implement the methods described herein.

The processor unit(s) 204 may be implemented with any combination of general-purpose microprocessors, microcontrollers, digital signal processors (DSPs), field programmable gate array (FPGAs), programmable logic devices (PLDs), controllers, state machines, gated logic, discrete hardware components, dedicated hardware finite state machines, or any other suitable entities that can perform calculations or other manipulations of information. In an implementation where the processor unit(s) 204 comprise a DSP, the DSP may be configured to generate a packet (e.g., a data packet) for transmission. In some aspects, the packet may comprise a physical layer data unit (PPDU).

The wireless device 202 may also include machine-readable media for storing software. The processing unit(s) 204 may comprise one or more machine-readable media for storing software. Software shall be construed broadly to mean any type of instructions, whether referred to as software, firmware, middleware, microcode, hardware description language, or otherwise. Instructions may include code (e.g., in source code format, binary code format, executable code format, or any other suitable format of code). The instructions, when executed by the processor unit(s) 204, cause the wireless device 202 to perform the various functions described herein.

The wireless device 202 may include a transmitter 210 and/or a receiver 212 to allow transmission and reception, respectively, of data between the wireless device 202 and a remote location. The transmitter 210 and receiver 212 may be combined into a transceiver 214. An antenna 216 may be attached to the housing 208 and electrically coupled with the transceiver 214. The wireless device 202 may also include (not shown) multiple transmitters, multiple receivers, multiple transceivers, and/or multiple antennas.

The transmitter 210 may be configured to wirelessly transmit packets and/or signals. For example, the transmitter 210 may be configured to transmit different types of packets generated by the processor unit(s) 204, discussed above. The packets are made available to the transmitter 201. For example, the processor unit(s) 204 may store a packet in the memory 206 and the transmitter 201 may be configured to retrieve the packet. Once the transmitter retrieves the packet, the transmitter 201 transmits the packet to a STA 106 wireless device 202 via the antenna 216.

An antenna 216 on a STA 106 wireless device 202 detects wirelessly transmitted packets/signals. The STA 106 receiver 212 may be configured to process the detected packets/signals and make them available to the processor unit(s) 204. For example, the STA 106 receiver 212 may store the packet in memory 206 and the processor unit(s) 204 may be configured to retrieve the packet.

The wireless device 202 may also include a signal detector 218 that may be used in an effort to detect and quantify the level of signals received by the transceiver 214. The signal detector 218 may detect such signals as total energy, energy per subcarrier per symbol, power spectral density, and other signals. The wireless device 202 may also include a digital signal processor (DSP) 220 for use in processing signals. The DSP 220 may be configured to generate a packet for transmission. In some aspects, the packet may comprise a physical layer data unit (PPDU).

The wireless device 202 may further comprise a user interface 222 in some aspects. The user interface 222 may comprise a keypad, a microphone, a speaker, and/or a display. The user interface 222 may include any element or component that conveys information to a user of the wireless device 202 and/or receives input from the user. The wireless device 202 may also include a housing 208 surrounding one or more of the components included in the wireless device 202.

The wireless device 202 may also include an association request processor 400. The association request processor 400 may be configured to process signals to associate a wireless device with a wireless network. In some implementations the signal may be referred to as an association request, a service request, or an attachment request.

When the wireless device 202 is implemented as a STA 106, the association request processor 400 may be configured to obtain one or more domain name system queries from applications executing on the wireless device 202. The domain name system queries may be included in the association request as will be described. In some implementations, the domain name system queries may be transmitted after an association request, but prior to completing the association of the wireless device 202 with the network.

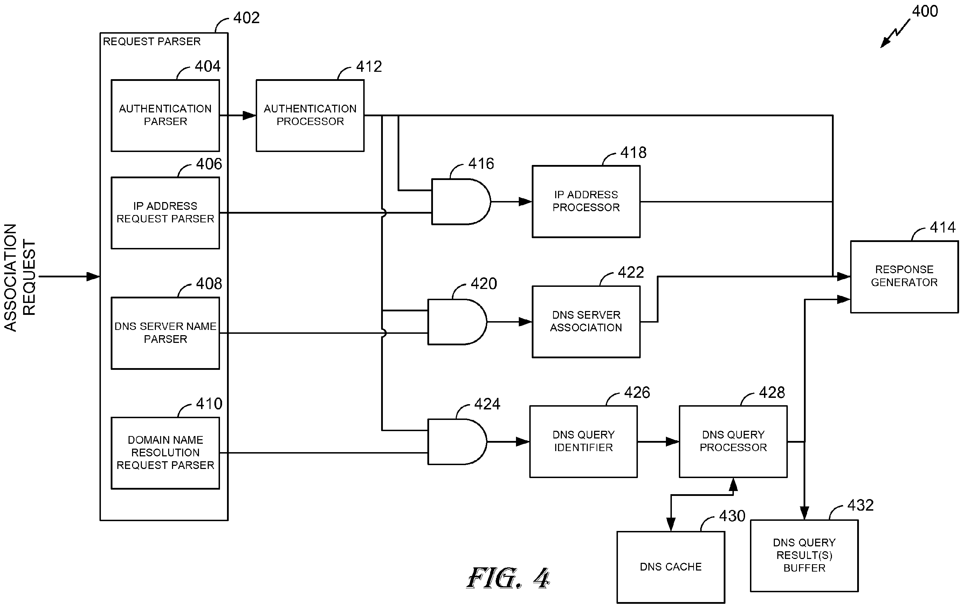

When the wireless device 202 is implemented as an AP 104, the association request processor 400 may be configured to process domain name system queries for a device prior to completing the association with the device. An association request processor 400 that may be included in an AP 104 will be described in further detail below, such as in reference to FIG. 4.

The various components of the wireless device 202 may be coupled together by a bus system 226. The bus system 226 may include a data bus, for example, as well as a power bus, a control signal bus, and a status signal bus in addition to the data bus. Those of skill in the art will appreciate the components of the wireless device 202 may be coupled together or accept or provide inputs to each other using some other mechanism.

Although a number of separate components are illustrated in FIG. 2, those of skill in the art will recognize that one or more of the components may be combined or commonly implemented. For example, the processor unit(s) 204 may be used to implement not only the functionality described above with respect to the processor unit(s) 204, but also to implement the functionality described above with respect to the signal detector 218. Further, each of the components illustrated in FIG. 2 may be implemented using a plurality of separate elements.

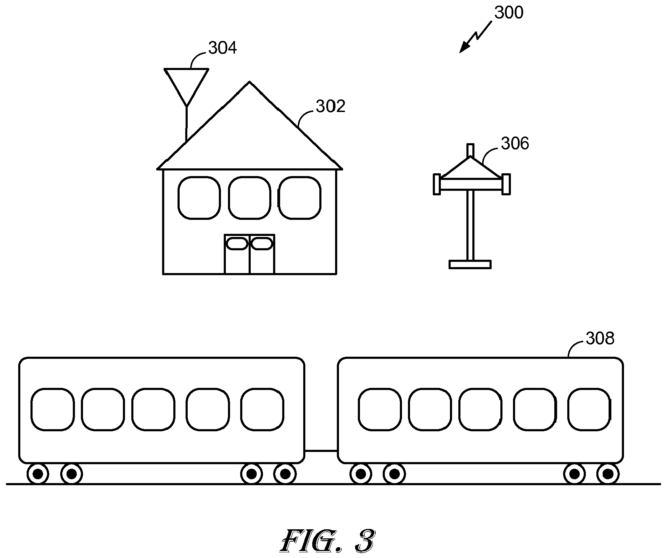

FIG. 3 shows an exemplary implementation of a wireless communication system. The wireless communication system 300 shown in FIG. 3 may be recognized as a railway station. The wireless communication system 300 includes a station 302. On the roof of the station 302, a first access point 304 is installed. Proximate to the station 302, a second access point 306 may be installed. A train 308 may arrive at the station 302 carrying passengers. A passenger may have one or more devices 106 (STAs) which are configured to communicate wirelessly.

A variety of methods exist for an STA 106 to associate with an AP 104. According to one method, the STA 106 transmits a request to a detected AP 104. In some implementations, this request may be referred to as a probe request. According to another method, the AP 104 may transmit a signal including information that may be used by a device to associate with the AP 104. In some implementations, this signal may be referred to as a beacon signal. The probe request or beacon signal may include information such as an identifier such as a service set identifier (SSID), an indicator specifying the data rates the STA 106 and/or AP 104 is capable of communicating with, an authentication challenge value (e.g., anonce), or other access information.

In some implementations, the STA 106 initiates an association procedure and, once associated, transmits DNS queries. Because the association procedure and DNS procedure are performed serially in these implementations, a delay in processing of the DNS query may be experienced, as the DNS query may be queued at the STA 106 until association is completed. In some implementations, the device may transmit the DNS queries to the AP 104 where the queries may be processed and re-associated with the requesting STA 106. In either implementation, a delay may be introduced in addition to the additional resources that may be needed to manage the queries submitted prior to completion of the association.

In some disclosed implementations, the STA 106 may include one or more DNS queries as part of the association procedure. For example, the STA 106 may include an information element in the association request frame which includes one or more DNS queries. A DNS query may include a full URL to a network location, the top-level domain name of a network location, or other information identifying a network location. In such implementations, the AP 104 may begin processing the DNS queries as the association procedures are completed. In some implementations, the DNS queries will be processed in parallel with at least some of the association procedures. Once the association procedures are completed, any DNS query results that have been received may be included in the association response signal. For example, the AP 104 may be configured to include the DNS query responses in an information element of an association response frame.

In explaining various aspects of the disclosure, the train communication system of FIG. 3 may be used. It will be appreciated, however, that the methods and systems described herein are applicable in a variety of wireless communication systems, not just transportation settings, where fast initial link set up is desirable. Other implementations may include a traffic signal AP to allow car drivers to attach to a network, a parking meter AP to allow STAs on the street (e.g., drivers, pedestrians, cyclists) to attach to a network, a library, etc.

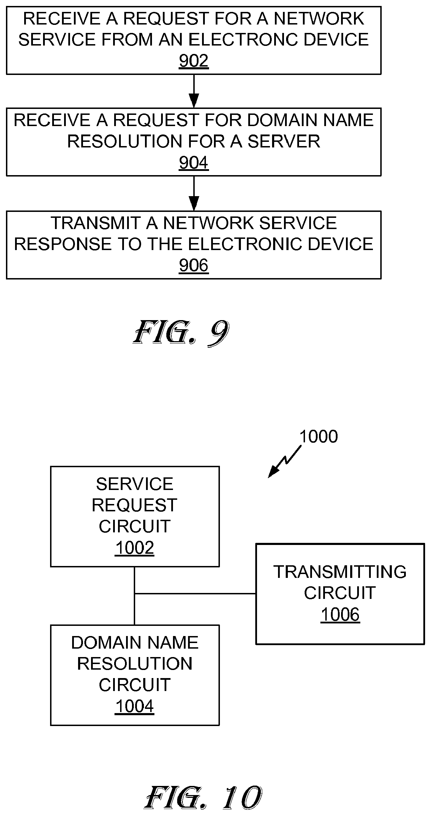

FIG. 4 shows a functional block diagram of an example of an association request processor. In an embodiment, the association request processor 400 may be implemented by wireless device 202 of FIG. 2 or device 1000 of FIG. 10. In an embodiment, the association request processor 400 may be implemented by an access point. The association request processor 400 includes a request parser 402. The request parser 402 may be configured to obtain the association request signal. The request parser 402 may include several parsers configured to extract specific elements from the association request.

As shown in FIG. 4, an authentication parser 404 may be included. The authentication parser 404 may be configured to identify authentication information included in the association request. The identification may be based on a known location for the authentication field within the association request. The identification may be derived based on a relative location of the authentication information within the association request. The extracted authentication information may be provided to an authentication processor 412. The authentication processor 412 may be configured to authenticate the request based on the extracted authentication information. The authentication processor 412 may locally authenticate the information using information in the device. The authentication processor 412 may transmit all or part of the extracted authentication information to an authentication server for an authentication determination. For example, the authentication processor 412 may be configured to authenticate based, at least in part, on remote dial-in user service (RADIUS), extensible authentication protocol (EAP), or the like. The authentication processor 412 may provide the authentication decision to a response generator 414.

The response generator 414 may be configured to obtain information associated with the association request and generate a response signal. In some implementations, the response signal may be an association response signal. The association response signal may include one or more elements including data related to the association request. The response generator 414 may be configured to include an authentication success or authentication failure indication based on the authentication decision. In some implementations, the response generator 414 may also be configured to include an indication of an error if the authentication decision process encountered an error. For example, if the authentication server is unavailable, a final decision may not be obtained. In such instances, it may be desirable to provide an error response to indicate, for example, a retry at a later time.

The request parser 402 may include an IP address request parser 406. The IP address request parser 406 may be configured to extract information related to a request for an IP address for the requesting device. The extraction may be based on a known location for the IP address request within the association request. The identification may be derived based on a relative location of the IP address request within the association request. The IP address request parser 406 may be configured to provide the IP address request information to an AND gate 416. The AND gate 416 may also receive the authentication decision. If the authentication decision affirmatively authenticates the request, the IP address request information may be provided to an IP address processor 418. In some implementations, the IP address processor 406 may be configured to identify an IP address in parallel with the authentication processing. In such instances, the AND gate 416 may be omitted.

The IP address processor 422 may be configured to communicate via a dynamic host configuration protocol (DHCP) to obtain an IP address. The communication may be based on the extracted IP address request information. The IP address received may be provided to the response generator 414. The response generator 414 may include one or more elements in the response indicating the assigned IP address. In the case where the authentication decision determined the requester is not authorized, the response generator 414 may not include an IP address in the response.

The request parser 402 may also include a domain name system (DNS) server parser 408. The DNS server parser 408 may be configured to extract information related to a DNS server for the requesting device. The extraction may be based on a known location for the DNS server information within the association request. The identification may be derived based on a relative location of the DNS server information within the association request. The DNS server parser 408 may be configured to provide the DNS server information to an AND gate 420. The AND gate 420 may also receive the authentication decision. If the authentication decision affirmatively authenticates the request, the DNS server information may be provided to a DNS server association module 422. In some implementations, the DNS server association module 422 may be configured to operate in parallel with the authentication processing. In such instances, the AND gate 420 may be omitted.

The DNS server association module 422 may be configured to store the DNS server information in a memory location of the device (e.g., AP) along with an identifier of the associated STA. This allows each associating device (e.g., STAs) to request a different DNS server. The stored DNS server information may be used as the server for subsequent domain name queries from the requesting device (e.g., STA). In some implementations, the DNS server association module 422 may determine the requested DNS server is unavailable. As such, the DNS server association module 422 may identify an alternative DNS server and associate the alternative DNS server with the requesting device.

Whether the requested DNS server or an alternate DNS sever is associated with the request, information associated with the associated DNS server may be provided to the response generator 514. The response generator 414 may include one or more elements in the response indicating the information related to the associated DNS server. In the case where the authentication decision determined the requester is not authorized, the response generator 414 may not include information related to a DNS server in the response.

The response parser 402 may include a domain name resolution request parser 410. The domain name resolution request parser 410 may be configured to extract information related to one or more DNS queries from the requesting device and/or applications associated therewith. The extraction may be based on a known location for the DNS query within the association request. The identification may be derived based on a relative location of the domain name resolution request within the association request. The domain name resolution request parser 410 may be configured to provide the request for domain name resolution to an AND gate 424. The AND gate 424 may also receive the authentication decision. If the authentication decision affirmatively authenticates the request, the domain name resolution requests may be provided to a DNS query identifier 426. In some implementations, the DNS query identifier 426 may be configured to operate in parallel with the authentication processing. In such instances, the AND gate 424 may be omitted.

The DNS query identifier 426 may be configured to identify individual DNS queries associated with the domain name resolution request. The DNS query identifier 426 may provide each identified query to a DNS query processor 428. The DNS query processor 428 may be configured to submit each DNS query to the DNS server associated with the device providing the DNS query. In some implementations, the DNS server may be selected by the AP 104 if an IP address for the STA 106 is not yet assigned. The DNS query processor 428 may be configured to maintain a DNS cache 430. The DNS cache 430 may store a name, IP address, and timestamp indicating the time the domain name lookup was performed. The timestamp may be used to identify when a particular entry should expire and be deleted from the DNS cache 430. If the DNS cache 430 includes an entry for the queried location, the cached information may be used. If the DNS cache 430 does not include an entry, the DNS query processor 428 may be configured to communicate with the associated DNS server to obtain the DNS information. Once obtained, the DNS information may be stored in the DNS cache. In some implementations, it may be desirable to associate a value identifying the requester with each cache entry. Accordingly, the cache entry may be obtained only by the requester. In some implementations, it may be desirable to associate the source of the cached information (e.g., the DNS server providing the information). In such implementations, the cache entry may be obtained only for requests to the same DNS server. Other caching and cache management techniques may be included without departing from the scope of the present disclosure.

The DNS query processor 428 may provide the DNS query response to the response generator 414. The response generator 414 may include one or more elements in the response indicating the DNS query response. In the case where the authentication decision determined the requester is not authorized, the response generator 414 may not include information related to the DNS queries in the response.

Once the response generator 414 has received an authentication decision, an IP address, and a DNS server, a response may be generated for transmission to the requesting device. In some implementations, the DNS query processor 428 may not receive a response for each domain name resolution request provided in the association request before the response generator 414 is prepared to generate the response. In such implementations, the response generator 414 may be configured to include any response to the domain name resolution request received in the response. The DNS query processor 428 may be configured to store any subsequently received DNS query responses in a DNS query result(s) buffer 430. The DNS query result(s) buffer 430 may be configured to identify the DNS query, the DNS query result, and the device that requested the domain name resolution corresponding to the DNS query. As the association response has been sent, the DNS query result(s) buffer 430 may be accessed by another element of the AP to include domain name resolution results corresponding to DNS query result(s) in subsequent transmissions to the requesting STA. For example, the transmitter may be configured to check the DNS query result(s) buffer 430 prior to transmitting a signal to the STA for DNS query result(s). Once a buffered result is transmitted, the result may be removed from the DNS query result(s) buffer 430.

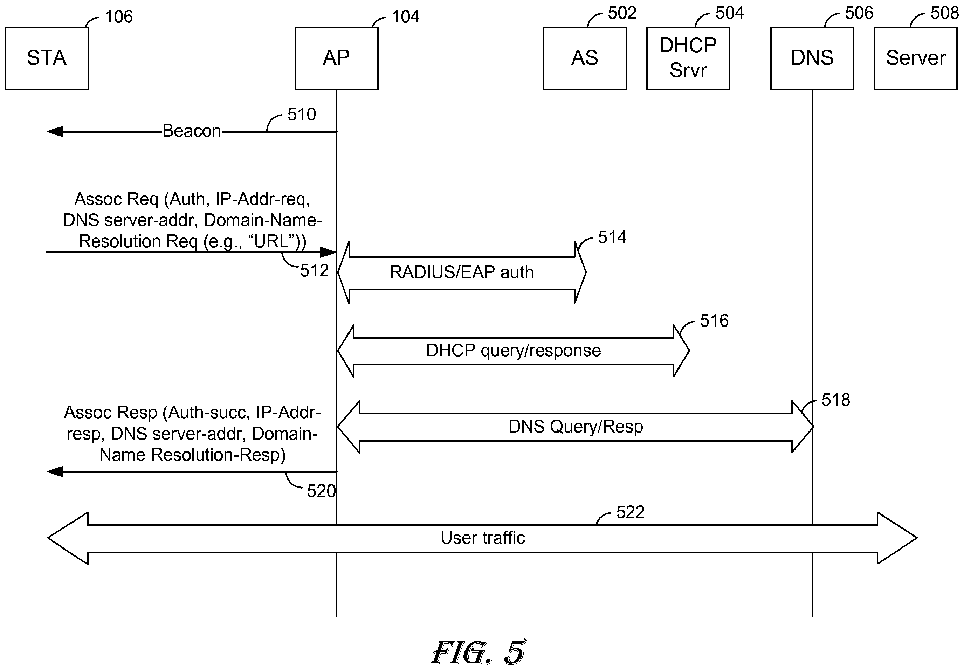

FIG. 5 shows a call flow diagram for an example association request domain name resolution request. The call flow diagram includes several entities which may be associated with a wireless communication network. The call flow may be initiated when the AP 104 transmits a signal 510. The signal 510, as shown in FIG. 5 is a beacon signal. The signal 510 may include information that an STA may use to associate with the wireless communication network.

The STA 106 may receive the signal 510. Based on the received signal 510, the STA 106 may be configured to associate with the AP 104. The STA 106 may be configured to transmit a signal 512 requesting association with the wireless communication network to the AP 104. The signal 512 may be an association request signal. In implementations utilizing LTE, the message 512 may be an Attach Request The signal 512 may include one or more of authorization information, IP address request, DNS server address, and one or more domain name resolution requests.

In some implementations, the signal 512 is transmitted via a level 2-MAC basis. This link layer signaling allows the domain name resolution requests to be submitted prior to full association and authentication with the network. In LTE or UMTS based systems, the signal 512 may be transmitted via NAS. In such systems, the packet gateway may be configured to service the signal 510. In HRPD or cdmalx based systems, the signal 512 may be transmitted via PPP/Mobile-IP. In such systems, the home agent (HA) or packet state switching node (PDSN) may be configured to service the signal 512.

The AP 104 may process the signal 512 as part of the association procedures. The AP 104 may generate an authentication signal 514. The authentication signal 514 may be transmitted to an authentication server (AS) 502. The authentication may include RADIUS, EAP, or other suitable authentication mechanisms. The AP 104 and AS 502 may exchange signals to determine whether the authentication is successful. Though not shown, if the authentication is unsuccessful, a signal may be transmitted to the STA 106 denying the association request and including an indication of the authentication failure.

The AP 104 may exchange signals 516 with a DHCP server 504 to obtain an IP address for the STA 106. In parallel, the AP 104 may also begin exchanging signals 518 with a DNS server 506 including DNS queries corresponding to one or more domain name resolution requests included in the association request 512. As an IP address may not be provided for the STA submitting the domain name resolution requests, the AP may include its IP address for the DNS queries. As such, the AP generates DNS requests on behalf of the STA while the association procedure is performed. Although the signals 516 and the signals 518 are shown in sequence in FIG. 5, the signals 516 and the signals 518 may be transmitted in parallel with each other as well as with the authentication signal 514. In some implementations, the signals 516 and/or 518 may be transmitted based on the result of the authentication process.

The AP 104 may generate a further signal 520 indicating the result of the association request. The further signal 520 may include an authentication success indication, an IP address, a DNS server, and results for any domain name resolution requests based on any DNS query responses received. In embodiments utilizing LTE, the message 520 may be an LTE Attach Accept message. In yet another embodiment, when the STA sends the request for domain name resolution prior to an associated state, the STA may encapsulate an "Ethernet frame format" that forms a DNS query in the Association Request message transmitted from the STA to the AP. When formatting the Ethernet frame, the STA may use a default IP address as its own IP address in creating the DNS query. This default IP address may be set as the source IP address in the Ethernet frame. The STA may also receive a "temporary IP address" from the AP that the STA may use to form the DNS query. In this embodiment, the STA sets a source IP address field of the Ethernet frame to the temporary IP address.

The destination MAC address of the Ethernet frame is set by either the STA or the AP to the MAC address of a Gateway. The gateway IP address may be obtained from configuration information stored at either the STA or the AP. In another embodiment, a Beacon or Probe Response may include an address of the Gateway. In this aspect, the STA will set the target MAC address to the address included in the Beacon or Probe Response. The AP will replace the target MAC address field of the encapsulated Ethernet frame with the actual MAC address of the Gateway.

Upon receiving the message 512 in the above embodiment, the AP deencapsulates the Ethernet frame from the request 512 and transmits the Ethernet frame into the network. When the Ethernet frame is received by the gateway, it may not be able to differentiate whether the Ethernet packet it receives is sent by the STA prior to the Association or whether it is post associated. The Gateway will then extract the IP packet from the received Ethernet packet and forwards the IP packet to the DNS server as a DNS query request. When the Gateway receives a DNS query response from the DNS server, the DNS query response is packaged into an Ethernet frame by the Gateway with the destination MAC address of the Ethernet frame set to the STA's MAC address, and forwards the Ethernet frame to the AP. When the AP receives the Ethernet frame, the AP will encapsulate the Ethernet frame into an Association Response, or a newly defined 802.11 frame, and then forward it to the STA.

The STA 106 may use the information included in the further signal 520 to exchange data traffic 522 with a server 508 which may be identified by a DNS query response. Accordingly, the STA 106 may not need to wait until association is complete to receive the DNS information for the server 508. This expedites the exchange of data traffic 522 between the STA 106 and the server 508.

In some aspects, other Ethernet frame types may be encapsulated in message 512. For example, an Ethernet frame formatted as a dynamic host configuration protocol (DHCP) message may be encapsulated in message 512. Similarly, an Ethernet frame formatted as a dynamic host configuration protocol (DHCP) message may be encapsulated in message 520. Messages 512and/or 520 may encapsulate any Internet Protocol (IP) based protocol message (e.g. DHCP, DNS, ARP).

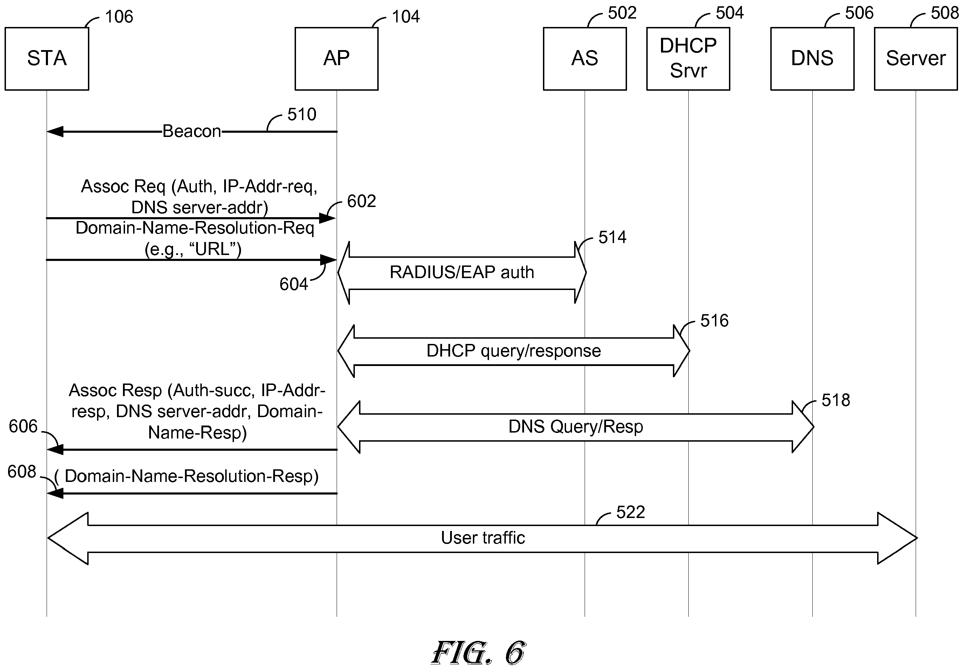

FIG. 6 shows a call flow diagram for another example association request DNS query. The call flow diagram begins similarly to the call flow shown in FIG. 5. In response to the signal 510, however, the STA 106 transmits an association request via a first signal 602 and, prior to receiving a response to the association request, a second signal 604 including one or more domain name resolution requests. Note that unlike FIG. 5, the first signal 602 may not include domain name resolution requests. The call flow continues similarly as shown in FIG. 5 with authentication signaling 514, DHCP signaling 516, and DNS query signaling 518.

The AP 104 may transmit an association response signal 606. The association response signal 606 may include domain name resolution responses in addition to association information (e.g., authentication success indicator, IP address, and DNS server address). If one or more domain name resolutions are pending when the response signal 606 is sent, the results may be transmitted via signal 608. In some implementations, the response signal 606 may include the domain name for the server 508. In such cases, the STA 106 may begin exchanging the traffic 522 with the server. In some implementations, the STA 106 may receive the domain name for the server 508 in the signal 608. In such cases, the STA 106 may begin exchanging the traffic 522 upon receipt of the name information. In either case, the STA 106 may obtain the domain name information sooner than waiting until the completion of the association process to transmit the domain name resolution requests.

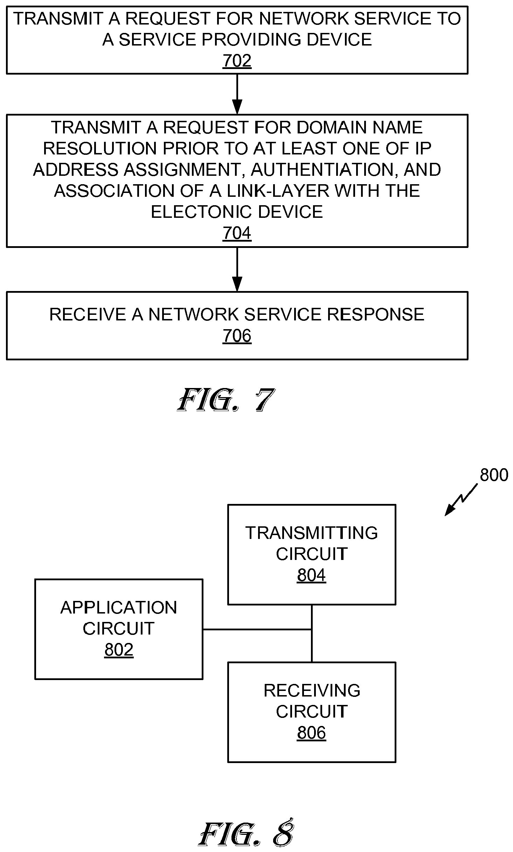

FIG. 7 shows a process flow diagram for a method of reducing latency associated with establishing communication with a server using a wireless communication system. The process may be performed in whole or in part by the devices described herein, such as that shown in FIG. 2 above or FIG. 8 below. In some implementations, the process may be implemented in a STA.

The process begins at block 702 where a request for a network service may be transmitted from an electronic device to a service providing device. In some implementations the request may be transmitted from an STA to an AP. At block 704, a request for domain name resolution may be transmitted from the electronic device to the service providing device prior to at least one of assignment of an IP address to the electronic device, authentication of the electronic device, and association of a link-layer with the electronic device. In an embodiment, the request for domain name resolution may be transmitted in the same message as the request for network service transmitted in block 702. In some aspects, either of the messages transmitted in blocks 702 and/or 704 may encapsulate an Ethernet frame. As discussed above with respect to Figure 5, in some aspects, the request for domain name resolution transmitted in block 704 may encapsulate an Ethernet frame formatted as a domain name system query. In some aspects, the Ethernet frame may be formatted as a domain name system query. In other aspects, an Ethernet frame encapsulated within either of the messages of blocks 702 or 704 may be formatted as any IP based protocol message (e.g. DHCP, DNS, ARP). At block 706, a response indicating the network service provided is received after the request for domain name resolution is transmitted. The signals transmitted and/or received may be similar to those shown in the call flows of FIGS. 5 or 6.

FIG. 8 shows a functional block diagram for a wireless communication apparatus. Those skilled in the art will appreciate that a wireless communication apparatus may have more components than the simplified wireless communication apparatus 800 shown in FIG. 8. The wireless communication apparatus 800 shown includes only those components useful for describing some prominent features of implementations within the scope of the claims. The wireless communication apparatus 800 may include an application circuit 802, a transmitting circuit 804, and a receiving circuit 806.

In some implementations, the application circuit 802 may be configured to communicate with a network server. The application circuit 802 may include one or more of a programmable chip, a processor, a memory, and a network interface. For example, the application circuit 802 may include one or more processor unit(s) 204. In some implementations, the means for communicating with a network server may include the application circuit 802.

In some implementations, the transmitting circuit 804 may be configured to transmit a request for a network service to a service providing device and to transmit a domain name query for the network server prior to at least one of assignment of an IP address to the electronic device, authentication of the electronic device, and association of a link-layer with the electronic device. The transmitting circuit 804 may include one or more of a transmitter, an antenna, a data network interface, and a memory. For example, the transmitting circuit 802 may include the transmitter 210 of FIG. 2. In some implementations, the means for transmitting may include the transmitting circuit 804. In an embodiment, the transmitting circuit 804 may be configured to perform one or more of the functions described above with respect to blocks 702 or 704.

In some implementations, the receiving circuit 806 may be configured to receive an indication of the network service provided. The receiving circuit 806 may include one or more of a receiver, an antenna, a signal processor, and a memory. For example, the receiving circuit 806 may include the receiver 212 of FIG. 2. In some implementations, the means for receiving may include the receiving circuit 806. In an embodiment, the receiving circuit 806 may be configured to perform one or more of the functions described above with respect to block 706.

FIG. 9 shows a process flow diagram for a method of reducing latency associated with establishing communication with a server using a wireless communication system. The process shown may be performed in whole or in part by the devices described herein, such as that shown in FIG. 2 above or FIG. 10 below. In some implementations, the process may be implemented in an AP.

The process begins at block 902 where a request for a network service may be received from an electronic device at a service providing device. At block 904, a request for domain name resolution may be received from the electronic device at the service providing device prior to at least one of assignment of an IP address to the electronic device, authentication of the electronic device, and association of a link-layer with the electronic device. In an embodiment, a device receiving both the request for network service and the request for domain name resolution may process the two requests at least partially in parallel. As discussed above with respect to Figure 5, the received request for domain name resolution may encapsulate an Ethernet frame. In some aspects, the encapsulated Ethernet frame may be formatted as a domain name system query. In some other aspects, the Ethernet frame may be formatted as any IP based protocol message (e.g. DHCP, DNS, ARP).

At block 906, a response indicating the network service provided may be transmitted after receiving the request for domain name resolution. In an embodiment, the response is transmitted after receiving the request for domain name resolution in block 904. The signals transmitted and/or received may be similar to those shown in the call flows of FIGS. 5 or 6.

FIG. 10 shows a functional block diagram for another wireless communication apparatus. Those skilled in the art will appreciate that a wireless communication apparatus may have more components than the simplified wireless communication apparatus 1000 shown in FIG. 10. The wireless communication apparatus 1000 shown includes only those components useful for describing some prominent features of implementations within the scope of the claims. The wireless communication apparatus 1000 may include a service request circuit 1002, a domain name resolution circuit 1004, and a transmitting circuit 1006.

In some implementations, the service request circuit 1002 may be configured to receive a request for a network service from an electronic device. The service request circuit 1002 may include one or more of a receiver, an antenna, a programmable chip, a processor, a memory, and a network interface. For example, in an embodiment, the service request circuit may include the receiver 212 of FIG. 2. In some implementations, the means for receiving a request for a network service may include the service request circuit 1002. In an embodiment, the service request circuit 1002 may be configured to perform one or more of the functions discussed above with respect to block 902.

In some implementations, the domain name resolution circuit 1004 may be configured to receive a request for domain name resolution from an electronic device prior to at least one of assignment of an IP address to the electronic device, authentication of the electronic device, and association of a link-layer with the electronic device. The domain name resolution circuit 1004 may include one or more of a receiver, an antenna, a processor, a query extractor, a memory, and a network interface. For example, the domain name resolution circuit may include the receiver 212 of FIG. 2. In some implementations, the means for receiving a domain name resolution request may include the domain name resolution circuit 1004. In an embodiment, the domain name resolution circuit 1004 may be configured to perform one or more of the functions discussed above with respect to block 904.

In some implementations, the transmitting circuit 1006 may be configured to transmit a response indicating the network service provided. The transmitting circuit 1006 may include one or more of a transmitter, an antenna, a data network interface, and a memory. For example, the transmitting circuit 1006 may include the transmitter 210 of FIG. 2. In some implementations, the means for transmitting may include the transmitting circuit 1006. In an embodiment, the transmitting circuit 1006 may be configured to perform one or more of the functions discussed above with respect to block 906.

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like. Further, a "channel width" as used herein may encompass or may also be referred to as a bandwidth in certain aspects.

As used herein, a phrase referring to "at least one of' a list of items refers to any combination of those items, including single members. As an example, "at least one of: *a, b,* or c" is intended to cover: *a, b, c, a-b, a-c, b-c,* and *a-b-c.*

The various operations of methods described above may be performed by any suitable means capable of performing the operations, such as various hardware and/or software component(s), circuits, and/or module(s). Generally, any operations illustrated in the Figures may be performed by corresponding functional means capable of performing the operations.

The various illustrative logical blocks, modules and circuits described in connection with the present disclosure may be implemented or performed with a general purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

In one or more aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Thus, in some aspects computer readable medium may comprise non-transitory computer readable medium (e.g., tangible media). In addition, in some aspects computer readable medium may comprise transitory computer readable medium (e.g., a signal). Combinations of the above should also be included within the scope of computer-readable media.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware or any combination thereof. If implemented in software, the functions may be stored as one or more instructions on a computer-readable medium. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, include compact disc (CD), laser disc, optical disc, digital versatile disc (DVD), floppy disk, and Blu-ray® disc where disks usually reproduce data magnetically, while discs reproduce data optically with lasers.

Thus, certain aspects may comprise a computer program product for performing the operations presented herein. For example, such a computer program product may comprise a computer readable medium having instructions stored (and/or encoded) thereon, the instructions being executable by one or more processors to perform the operations described herein. For certain aspects, the computer program product may include packaging material.

Software or instructions may also be transmitted over a transmission medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of transmission medium.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

While the foregoing is directed to aspects of the present disclosure, other and further aspects of the disclosure may be devised without departing from the basic scope thereof, and the scope thereof is determined by the claims that follow.

### In the following, further embodiments are described to facilitate the understanding of the invention:

1. A method of reducing latency associated with establishing communication with a server using a wireless communication system, comprising:
   transmitting a request for a network service from an electronic device to a service providing device;
   transmitting a request for domain name resolution for the server from the electronic device to the service providing device prior to at least one of assignment of an IP address to the electronic device, authentication of the electronic device, and association of a link-layer with the electronic device; and
   receiving a response at the electronic device indicating the network service provided, the domain name system query being transmitted prior to receiving the response.
2. The method of Embodiment 1, further comprising receiving a signal identifying the server prior to assignment of an IP address to the electronic device.
3. The method of Embodiment 2, further comprising transmitting a signal from the electronic device to the server based at least in part on the received identifying signal.
4. The method of Embodiment 2, wherein the signal identifying the server includes an IP address associated with the server.
5. The method of Embodiment 1, wherein the request for domain name resolution is transmitted with the request for a network service.
6. The method of Embodiment 1, wherein the request for domain name resolution is transmitted after the request for a network service.
7. The method of Embodiment 1, wherein the request for a network service includes at least one of authentication information, address information associated with the electronic device, and address information associated with a domain name system server.
8. The method of Embodiment 1, wherein the request for domain name resolution includes a domain name associated with the server, and the server is coupled with the wireless communication system.
9. The method of Embodiment 1, wherein the request for a network service comprises an association request.
10. The method of Embodiment 1, wherein the response indicating the network service comprises an association response.
11. The method of Embodiment 1, further comprising encapsulating an Ethernet frame in the request for domain name resolution
12. The method of Embodiment 11, wherein the Ethernet frame is formatted as a domain name system query.
13. The method of Embodiment 11, wherein the Ethernet frame is formatted as a dynamic host configuration protocol message.
14. The method of Embodiment 11, further comprising setting a destination address in the Ethernet frame to a gateway address.
15. The method of Embodiment 1, wherein the request for domain name resolution comprises an association request frame.
16. An apparatus for reducing latency associated with establishing communication with a server using a wireless communication system, comprising:
   an application configured to communicate with a network server;
   a transmitter configured to transmit a request for a network service to a service providing device, the transmitter further configured to transmit a request for domain name resolution for the server prior to at least one of assignment of an IP address to the apparatus, authentication of the apparatus, and association of a link-layer with the apparatus; and
   a receiver configured to receive an indication of the network service provided, the domain name resolution request being transmitted prior to receiving the indication of the network service provided.
17. The apparatus of Embodiment 16, wherein the receiver is configured to receive a signal identifying an address of the server prior to an IP address being assigned to the apparatus
18. The apparatus of Embodiment 17, wherein the transmitter is configured to transmit communications between the application and the server based at least in part on the signal identifying the server.
19. The apparatus of Embodiment 17, wherein the signal identifying a server includes an IP address associated with the server.
20. The apparatus of Embodiment 16, wherein the domain name resolution request is transmitted with the request for a network service.
21. The apparatus of Embodiment 16, wherein the request for domain name resolution is transmitted after the request for a network service.
22. The apparatus of Embodiment 16, wherein the request for a network service includes at least one of authentication information, address information associated with the electronic device, and address information associated with a domain name system server.
23. The apparatus of Embodiment 16, wherein the request for domain name resolution includes a domain name associated with a server coupled with the wireless communication system.
24. The apparatus of Embodiment 16, wherein the request for a network service comprises an association request.
25. The apparatus of Embodiment 16, wherein the response indicating the network service comprises an association response.
26. The apparatus of Embodiment 16, wherein the transmitter is further configured to encapsulate an Ethernet frame in the request for domain name resolution.
27. The apparatus of Embodiment 26, wherein the transmitter is further configured to format the Ethernet frame as a domain name system query.
28. The apparatus of Embodiment 26, wherein the transmitter is further configured to format the Ethernet frame as a dynamic host configuration protocol message.
29. The apparatus of Embodiment 16, wherein the request for domain name resolution comprises an association request frame.
30. The apparatus of Embodiment 26, further comprising setting a destination address in the Ethernet frame to a gateway address.
31. An apparatus for reducing latency associated with establishing communication with a server using a wireless communication system, comprising:
   means for communicating with a network server;
   means for transmitting a request for a network service to a service providing device, means for transmitting a request for domain name resolution for the server prior to at least one of assignment of an IP address to the electronic device, authentication of the electronic device, and association of a link-layer with the apparatus; and
   means for receiving an indication of the network service provided, the request for domain name resolution being transmitted prior to receiving the indication of the network service provided.
32. The apparatus of Embodiment 31, wherein the means for receiving comprise an application, wherein the means for transmitting comprise a transmitter, and the means for receiving comprise a receiver.
33. A computer readable storage medium comprising instructions executable by a processor of an apparatus which cause the apparatus to perform a method of reducing latency associated with establishing communication with a server using a wireless communication system, the method comprising:
   transmitting a request for a network service from an electronic device to a service providing device;
   transmitting a request for domain name resolution for the server from the apparatus to the service providing device prior to at least one of assignment of an IP address to the electronic device, authentication of the electronic device, and association of a link-layer with the apparatus; and
   receiving a response at the electronic device indicating the network service provided, the request for domain name resolution being transmitted prior to receiving the response.
34. A method of reducing latency associated with establishing communication with a server using a wireless communication system, comprising:
   receiving a request for a network service from an electronic device at a service providing device;
   receiving a request for domain name resolution for the server from the electronic device at the service providing device prior to at least one of assignment of an IP address to the electronic device, authentication of the electronic device, and association of a link-layer with the electronic device; and
   transmitting a response to the electronic device indicating the network service provided, the request for domain name resolution being received prior to transmitting the response.
35. The method of Embodiment 34, further comprising:
   obtaining information identifying the server based at least in part on the request for domain name resolution.
36. The method of embodiment 35, further comprising transmitting a DNS query to a DNS server, the DNS query indicating a source address of the service providing device.
37. The method of embodiment 36, wherein the service providing device is an access point.
38. The method of Embodiment 35, further comprising transmitting a signal to the electronic device including the obtained information.
39. The method of Embodiment 35, wherein obtaining information identifying the server comprises transmitting a domain name system query to a domain name system server and receiving server identifying information from the domain name system server.
40. The method of Embodiment 35, wherein obtaining information identifying a server comprises identifying the information in a cache associated with the service providing device.
41. The method of Embodiment 35, wherein the information identifying the server comprises an IP address.
42. The method of Embodiment 34, wherein the request for domain name resolution is received with the request for a network service.
43. The method of Embodiment 34, wherein the request for domain name resolution is received after the request for a network service.
44. The method of Embodiment 34, wherein the request for a network service includes at least one of authentication information, address information associated with the electronic device, and address information associated with a domain name system server.
45. The method of Embodiment 34, wherein the request for domain name resolution includes a domain name associated with the server, wherein the server is coupled with the wireless communication system.
46. The method of Embodiment 34, wherein the request for a network service comprises an association request.
47. The method of Embodiment 34, wherein the response indicating the network service comprises an association response.
48. The method of Embodiment 34, wherein the request for domain name resolution includes an encapsulated Ethernet frame.
49. The method of Embodiment 30, wherein the request for domain name resolution comprises an association request.
50. The method of Embodiment 48, wherein the encapsulated Ethernet frame is formatted as a domain name service query.
51. The method of Embodiment 48, wherein the encapsulated Ethernet frame is formatted as a dynamic host configuration protocol messsage.
52. The method of Embodiment 48, further comprising transmitting a response to the request for domain name resolution.
53. The method of Embodiment 52, wherein the response to the request for domain name resolution comprises an association response.
54. The method of Embodiment 52, wherein the response to the request for domain name resolution comprises an encapsulated Ethernet frame.
55. The method of Embodiment 54, wherein the Ethernet frame is formatted as a DNS query response.
56. An apparatus for reducing latency associated with establishing communication with a server using a wireless communication system, comprising:
   a receiver configured to receive a request for a network service from an electronic device and to receive a request for domain name resolution for the server from the electronic device, the request for domain name resolution being received prior to at least one of assignment of an IP address to the electronic device, authentication of the electronic device, and association of a link-layer with the electronic device; and
   a transmitter configured to transmit a response to the electronic device indicating the network service provided, the request for domain name resolution being received prior to transmitting the response.
57. The apparatus of Embodiment 56, further comprising:
   a processor configured to obtain information identifying the server based at least in part on the request for domain name resolution.
58. The apparatus of Embodiment 56, further comprising a request for domain name resolution circuit configured to identify domain name information based on the request for domain name resolution, and wherein the transmitter is further configured to transmit a signal including the domain name information.
59. The apparatus of Embodiment 57, wherein obtaining information identifying the server comprises transmitting a request for domain name resolution to a domain name system server and receiving the information from the domain name system server.
60. The apparatus of embodiment 59, wherein the request for domain name resolution indicates a source IP address equivalent to an IP address of the apparatus.
61. The apparatus of Embodiment 59, wherein obtaining information identifying the server comprises identifying the information in a cache associated with the service providing device.
62. The apparatus of Embodiment 58, wherein the domain name information includes an IP address.
63. The apparatus of Embodiment 57, wherein the request for domain name resolution is received with the request for a network service.
64. The apparatus of Embodiment 57, wherein the request for domain name resolution is received after the request for a network service.
65. The apparatus of Embodiment 57, wherein the request for a network service includes at least one of authentication information, address information associated with the electronic device, and address information associated with a domain name system.
66. The apparatus of Embodiment 57, wherein the request for domain name resolution includes a domain name associated with the server, wherein the server is coupled with the wireless communication system.
67. The apparatus of Embodiment 57, wherein the request for a network service comprises an association request.
68. The apparatus of Embodiment 57, wherein the response indicating the network service comprises an association response.
69. The apparatus of Embodiment 57, wherein the request for domain name resolution includes an encapsulated Ethernet frame.
70. The apparatus of Embodiment 56, wherein the request for domain name resolution comprises an association request.
71. The apparatus of Embodiment 69, wherein the encapsulated Ethernet frame is formatted as a domain name service query.
72. The apparatus of Embodiment 69, wherein the encapsulated Ethernet frame is formatted as a dynamic host configuration protocol message.
73. The apparatus of Embodiment 56, wherein the transmitter is further configured to transmit a response to the request for domain name resolution.
74. The apparatus of Embodiment 73, wherein the response to the request for domain name resolution comprises an association response.
75. The apparatus of Embodiment 73, wherein the response to the request for domain name resolution comprises an encapsulated Ethernet frame.
76. The apparatus of Embodiment 75, wherein the transmitter is further configured to format the Ethernet frame as a DNS query response.
77. An apparatus for reducing latency associated with establishing communication with a server using a wireless communication system, comprising:
   means for receiving a request for a network service from an electronic device;
   means for receiving a request for domain name resolution for a server from the electronic device prior to at least one of assignment of an IP address to the electronic device, authentication of the electronic device, and association of a link-layer with the electronic device; and
   means for transmitting a response to the network device indicating the network service provided, the request for domain name resolution being received prior to transmitting the response.
78. The apparatus of Embodiment 77, wherein the means for receiving a request comprises a receiver, and wherein the means for receiving a request for domain name resolution comprises a receiver and a processor, and wherein the means for transmitting comprises a transmitter.
79. The apparatus of embodiment 77, further comprising means for transmitting a DNS query to a DNS server, the DNS query indicating a source address of the service providing device.
80. A computer readable storage medium comprising instructions executable by a processor of an apparatus which cause the apparatus to perform a method of reducing latency associated with establishing communication with a server using a wireless communication system, the method comprising:
   receiving a request for a network service from an electronic device at a service providing device;
   receiving a request for domain name resolution for a server from the electronic device at the service providing device prior to at least one of assignment of an IP address to the electronic device, authentication of the electronic device, and association of a link-layer with the electronic device; and
   transmitting a response to the electronic device indicating the network service provided, the request for domain name resolution being received prior to transmitting the response.

## Claims

1. A wireless access point (104) comprising:
a receiver (212) configured to receive, from an access terminal (106), an association request (512), the association request including one or more domain name resolution requests corresponding to at least one server;
a transmitter (210) configured to transmit an association response to the access terminal, the association response including one or more domain name resolution request results indicating an address of the server; and
a processor (204) configured to:
perform an association procedure with the access terminal, the association procedure including generating the association response, and
process the one or more domain name resolution requests in parallel with at least a portion of the association procedure.

2. The access point of claim 1, wherein to process the one or more domain name resolution requests the processor is configured to:
cause the transmitter to transmit one or more domain name system (DNS) queries corresponding to the one or more domain name resolution requests to one or more DNS servers; and
receive via the receiver one or more DNS query responses from the one or more DNS servers, wherein the domain name resolution request results are based on the DNS query responses.

3. The access point of claim 2, wherein the processor includes an IP address of the access point with the transmitted one or more DNS queries.

4. The access point of claims 2 or 3, wherein the association request includes an association request frame including an information element that includes the one or more DNS queries.

5. The access point of any one of claims 2 or 3, wherein the association request includes an encapsulated ethernet frame that includes the one or more DNS queries, and wherein a source address of the encapsulated ethernet frame is set to a default IP address or to a temporary IP address.

6. The access point of any one of claims 2-5, wherein the association response includes:
an association response frame including an information element that includes the one or more DNS query responses; and
an IP address assigned for the access terminal.

7. The access point of any one of claims 2-6, wherein the processor is configured to receive an ethernet frame that includes the one or more DNS query responses and to encapsulate the ethernet frame in the association response.

8. The access point of claim 1, wherein the association request includes a uniform resource locator (URL) of the server.

9. A method comprising:
receiving, from an access terminal (106), an association request (512), the association request including one or more domain name resolution requests corresponding to at least one server;
transmitting an association response to the access terminal, the association response including one or more domain name resolution request results indicating an address of the server;
performing an association procedure with the access terminal, the association procedure including generating the association response; and
processing the one or more domain name resolution requests in parallel with at least a portion of the association procedure.

10. The method of claim 9, wherein processing the one or more domain name resolution requests includes:
causing the transmitter to transmit one or more domain name system (DNS) queries corresponding to the one or more domain name resolution requests to one or more DNS servers; and
receiving one or more DNS query responses from the one or more DNS servers, wherein the domain name resolution request results are based on the DNS query responses.

11. The method of claim 10, wherein the transmitted one or more DNS queries include an IP address of the access point.

12. The method of claims 10 or 11, wherein the association request includes an association request frame including an information element that includes the one or more DNS queries.

13. The method of claims 10 or 11, wherein the association request includes an encapsulated ethernet frame that includes the one or more DNS queries, and wherein a source address of the encapsulated ethernet frame is set to a default IP address or to a temporary IP address.

14. The method of any one of claims 10-13, wherein the association response includes:
an association response frame including an information element that includes the one or more DNS query responses; and
an IP address assigned for the access terminal.

15. The method of any one of claims 10-14, further including receiving an ethernet frame that includes the one or more DNS query responses and encapsulating the ethernet frame in the association response.
